# EUROPEAN PATENT APPLICATION

(11) **EP 2 270 547 A2**
(43) Date of publication of application: **05.01.2011**
(21) Application number: 10164929.1
(22) Date of filing: 04.06.2010
(51) Int. Cl.: G01V 5/00

(54) **Cargo screening and tracking system and method**

(30) Priority: 04.06.2009 US 184082 P
(71) Applicant: Siemens Industry, Inc., Alpharetta, GA 30005-4437 (US)
(72) Inventor: Carpenter, Micheal D, Arlington, TX 76016 (US)
(74) Representative: French, Clive Harry

(57) **Abstract**

A method for screening and tracking items of cargo to be shipped aboard a vehicle includes steps of scanning the items to generate x-ray image data of the items; subjecting the image data to computer implemented image recognition to identify the items; presesenting images generated from the image data to a human operator trained in object recognition; reviewing the images with the human operator; recording the result of the human operator's review, wherein the human operator is one of a number of such operators at one or more locations who have access to or receive image data for items to be shipped for each item determining if the results from the computer implemented and human review meet criteria for items that should not be shipped, and loading items which are to be shipped into a shipping container.

## Description

This application claims priority of U.S. Provisional Serial No.: 61/184,082 filed June 4, 2009.

### Technical Field

The present invention relates to systems and methods for the security screening of air and marine cargo.

### Background of the Invention

To reduce the threat against passenger airlines that carry cargo, the US congress has enacted legislation that mandates the 100% screening of air cargo transported on passenger aircraft by August of 2010 to a level commensurate with that of passenger baggage. There are various means of screening that provide a level commensurate with passenger bags, including physical search, x-ray scanning, computed tomography (CT) scanning, and explosive trace detector (ETD) equipment. In some cases, multiple means are employed sequentially, such as the case in which the x-ray results are unclear, and an item may be either physically searched or processed in ETD equipment as a second step.

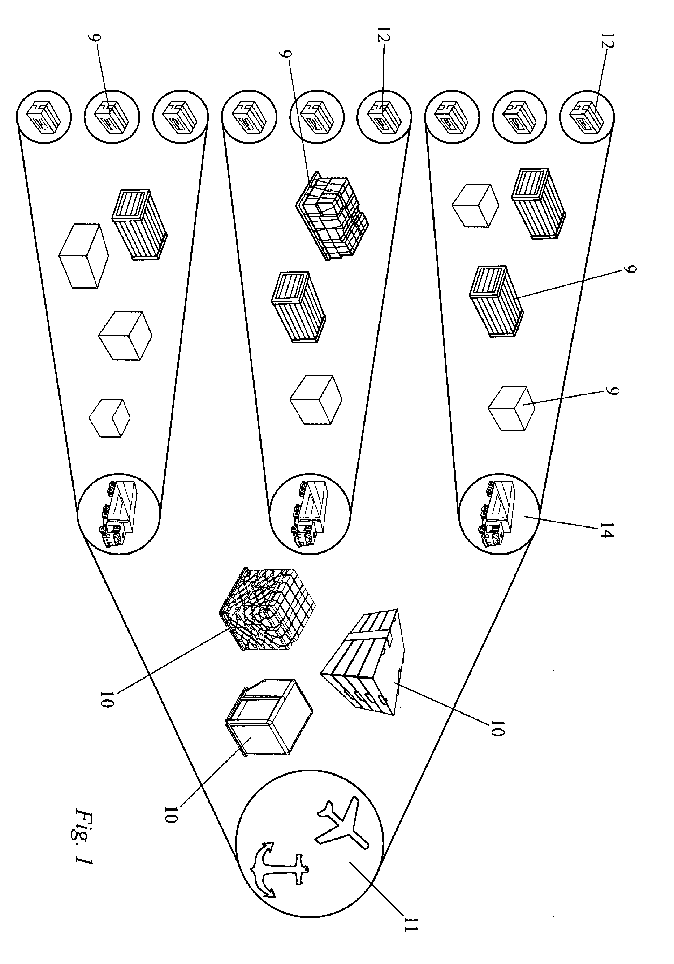

Cargo carried in wide-body passenger aircraft is typically loaded in Unit Load Devices (ULDs), secure containers of standard size which are typically prepared off site by shippers or freight forwarding services. Figure 1 shows the processing flow of cargo to airports and seaports 8.

These known methods can be used in conjunction with the present invention with the results saved in the database described hereafter.

Figure 1 shows the processing flow of cargo to airports or seaports 11. Cargo 9 carried in wide-body passenger aircraft is typically loaded in Unit Load Devices (ULDs) or other containers 10, which are typically prepared off site by shippers 12 or freight forwarding services14. Goal of the inspection procedure is to scan or otherwise inspect each container 10 before loading into a transport vehicle such as a plane or ship, preferably without having to open a container 10.

In Figure 1 Cargo items 9 are aggregated into relevant ULDs or other containers 10 in processing. The current state-of-the-art in scanning does not allow for the items loaded in a ULD 10 to be scanned without unloading them and screening them serially. One approach that has emerged as a method of complying with the new U.S. legislation is to deploy x-ray scanning equipment to points in the preparation chain prior to the loading of ULDs, and use specially trained operators to screen cargo destined for ULDs ahead of time. The chain of custody from the point of screening to the aircraft must be carefully observed, and records are faxed or emailed to the TSA after the fact.

In other words, if an item in the image can be reliably recognized by software analysis of the image, then it is classified as ordinary or potentially dangerous. Image recognition analysis may for example reveal that an item shown is being shielded by another item and that that the image review results will not be reliable, requiring a manual inspection.

### Summary of the Invention

A method for screening and tracking items of cargo to be shipped aboard a vehicle includes steps of scanning the items to generate x-ray image data of the items; subjecting the image data to computer-implemented image recognition to identify the items; presesenting images generated from the image data to a human operator trained in object recognition; reviewing the images with the human operator; recording the result of the human operator's review, wherein the human operator is one of a number of such operators at one or more locations who have access to or receive image data for items to be shipped for each item; determining if the results from the computer implemented and human review meet criteria for items that should not be shipped "exceptions"; loading items which are to be shipped into a shipping container; further comprising loading the items which are not exceptions into a common container and loading the container on the vehicle.

A method of the invention includes a step of scanning a number of items to generate image data. If no decision can be made by automatic image recognition analysis, manual review of the image may be employed. Human Machine Interface (HMI) may be used for screening. A certified operator is shown the image with pre-knowledge from integrated recognition, and the operator is provided controls to capture operator input "comments" regarding each image.

In a preformed collection of images of objects comparable to the images presented to the reviewer; central image review and use of images for comparison. A distributed system for the security screening of air cargo that minimizes costs associated with the process. Distributed for purposes of the invention means that tasks are performed in a manner that spreads the steps of the process out among different persons, machines and/or locations.

In Figure 1, cargo is aggregated into relevant ULDs 10 after having been scanned to create an x-ray image of such items.

The current state-of-the-art in scanning does not allow for the items loaded in ULDs to be scanned without unloading them and screening them serially. One approach that has emerged as a viable method of complying with the new legislation is to deploy x-ray scanning equipment to points in the preparation chain prior to the loading of ULDs, and use specially trained operators to screen cargo destined for ULDs ahead of time. The chain of custody from the point of screening to the aircraft or other transport must be carefully observed, and records are faxed or emailed to the TSA after the fact. X-Ray scanning products must be certified by the TSA for security screening applications. Presently, fewer than 10 companies have products certified in these applications. The products themselves include 3 principal functions, which are tightly integrated in a proprietary package:
1.) Scanning-creating an electronic image.
2.) Item Recognition- Varying degrees of automatic recognition are integrated into the products.
3.) Human Machine Interface (HMI) for screening- A certified operator is shown the image with pre-knowledge from integrated recognition, and the operator is provided controls to capture operator input regarding each image.

Operators of the X-Ray scanning products must be trained and certified by a method approved and monitored by the "ISA", Additional training tends to make the personnel certified to operate the scanning equipment somewhat specialized in their work task, and somewhat higher paid. For this reason, the use of x-ray equipment for screening prior to ULD packing tends to be scheduled such a single contiguous period of time, not longer than 1 work shift, is needed to screen a full day's cargo. In terms of the operation, this approach yields a serial scanning process that lies fully within the critical path between preparing cargo for shipment and ULD packing. As such, the processing rate of this scanning step is required to be higher than it would be if scanning were coincident with daily cargo processing.

The other viable approach to screening would concentrate the screening in as few sites as possible, at the airports themselves. In this approach, cargo is aggregated at the airport, and is screened prior to loading aboard an aircraft. As already noted in this document, state-of-the-art screening technology does not allow ULDs to be scanned all at once. Therefore, in this approach, ULDs must be broken down and screened, then rebuilt and loaded onto the aircraft. While this approach is theoretically viable, it is problematic from the perspective of the freight forwarder, since their value proposition is being degraded (they don't provide prepared cargo as they did before), and it represents a labor intensive system bottleneck at the airport. According to the present invention, ULD's are not broken open as a normal step of screening.

### Detailed Description

This invention utilizes known technologies in combination to provide a highly secure cargo screening environment that can meet the requirements of government legislation, reduce costs throughout, simplify the processing of cargo 11, and improve productivity. This is achieved by breaking up the bundled x-ray scanning product functionality such that different functions do not need to occur at the same place or time. Scanning/imaging and automatic recognition, which do not, in and of themselves, require extensive human training, are therefore distributed, i.e., performed at a variety of times and locations preferably allowed to be widely distributed, that is, taking place at a number of different places, HMI, the critical step that requires specialized training to operate, can be centralized so that images from the distributed scanning and imaging points are electronically forwarded or otherwise made available to a resolution center forwarded for final, expert resolution.

In this process, all cargo 11 is coded (preferably bar-coded) with serial numbers that uniquely describe both the class of like items, and individual items within the class. ULDs OR containers 10 are also uniquely coded/barcoded or otherwise coded), so that as serialized items are added to a ULD, a complete identification hierarchy is established. Once the ULD 10 is loaded on an aircraft or other transport vehicle such as a ship or truck, a complete manifest is automatically accumulated. An aircraft may contain many ULDs, each ULD may contain several classes of items, and each class is composed of individual, uniquely identified items. These unique identification numbers and hierarchy of identification allows the system to keep data paced with physical material flow. This is accomplished by scanning the bar code containing the unique identifying number in each instance (time) in which additional information is attributed to an item, or an item changes location or hierarchical status.

The benefits of this approach at the distributed scanning points, such as manufacturers or freight forwarders, is that the operator of the scan device is no longer required to be certified or have unique expertise. Scanning can therefore occur as material is prepared prior to ULD loading in a gradual process that matches the pace of ULD preparation. The scanning equipment itself is simplified compared to the equipment currently in use, in that on site recognition and HMI have been removed. This simplification, coupled with the relatively broad installation base, results in reduced cost per unit. The screening process is integrated with the normal processing and aggregation of cargo into ULDs destined for specific cities on wide-body aircraft. In this process, individual items are digitally photographed as they are packed into boxes. The boxes are uniquely identified by barcode. The digital image for each type of item in a container (typically 1 type per container) are electronically associated with the unique barcode for the container. No more than one electronic image is captured for each type.

The container is sealed, the electronic manifest for the items it contains is associated with the container, and the container's barcode is scanned again as it is x-rayed. The x-ray image is associated with other electronic information related to that container, which at this point includes:
1.) The unique identifier for the container
2.) Digital visible images for each type of item within the container
3.) A manifest, describing the contents of the container
4.) A Digital x-ray image of the sealed container

This information is forwarded to a centralized screening point, for analysis by certified screeners in a controlled environment. The screener is first showed the x-ray image of an individual container. During examination and analysis of the x-ray image, the screener may need to see any or all of the digital visible images of the types of objects inside the container 10 to be able to certify that the container can be loaded onto a passenger aircraft. If the screener requests (through the HMI) to view the digital visible images of the types of items in the container, the HMI will show the screener thumbnail images if more than one type of item is in the container, or the high resolution visible image if the container contains only a single type. When thumbnail images of multiple types are shown, the screener may select which image type to view in high resolution. If the screener is not satisfied, the screener may enter comments and indicate the features from the x-ray which cause concern, and effectively "reject" the container, to preclude its loading into the ULD and onboard the aircraft. The rejection, along with comments and identification of concern features, is included in the data associated with the container's unique identification number. If the screener is satisfied, this result is included in the data associated with the container's unique identification number. This updated information is available in the system, and when the container's barcode is read at the next processing step, such as ULD loading, the system will return the final status code to the operator.

As containers are loaded into ULDs, the ULD is scanned, and the individual barcodes for constituent containers are scanned. When ULD loading is complete, the ULD is sealed and its barcode is scanned, indicating completion of loading. When the sealed ULD is loaded unto a truck, its barcode is scanned again, associating the items loaded into the ULD with the truck, and the status of the ULD's seal. When the truck unloads the ULD, the ULD's barcode is again scanned, informing the system of the change in status. This routine is extended through the ULD handling, from aircraft loading to ULD unloading after transport.

Overall security is enhanced through the process, in that a great deal of information is retained regarding the cargo that has been loaded on passenger aircraft. This information would be critical in a forensic investigation or in the process of continually testing and monitoring the system. In addition the centralized screening architecture allows for continual training and evaluation of screeners. Images that include bona-fide threats may be introduced into the system, for which no actual container or item actually exists, may be introduced randomly to test and evaluate screeners in a way that is impractical to do in current systems.

In an aspect of the invention, the containers are coded such as bar-coded or labeled with scannable tags such as bar codes or RFID tags. According to another aspect of the invention includes steps of: Creating a computerized content manifest is associated with the container, which lists item codes or descriptions making a security scan of each of the items in that container (accomplished prior to loading the container).

Associating security scan information is associated with the code of that container in a database maintained by a security computerized information system; closing and sealing completed containers such that breach of the seal indicates that the container has been tampered with; transporting the items by delivery of the container to one or more intermediate destinations before delivery to an unloading site at which the items are unloaded from the container; inspecting the seal or breach on each such delivery and scanning the container code upon delivery to each intermediate destination and the unloading site providing scan results to a control computer which is part of the computerized information system which computer associates the scan results with the code of the container and updates a data record for that container saving as part of the data record the location of the container and a status indication for that container when at that location.

## Claims

1. A method for screening and tracking items of cargo to be shipped aboard a vehicle includes steps of:
scanning the items to generate image data of the items;
subjecting the image data to computer implemented image recognition to identify the items;
presenting images generated from the image data to a human operator trained in object recognition;
reviewing the images with the human operator;
recording the result of the human operator's review, wherein the human operator is one of a number of such operators who have access to or receive image data for items to be shipped;
determining if the results from the computer implemented image recognition and human review meet criteria for items that should not be shipped;
loading items which are to be shipped into a shipping container; and
loading the container on the vehicle.

2. The method of claim 1, wherein the vehicle is a plane.

3. The method of claim 1, wherein the vehicle is a ship.

4. The method of claim 1, further comprising recording the result of the human operator's review in a database, wherein the human operator is one of a number of such operators at one or more locations who have access to or receive image data for items to be shipped.

5. The method of claim 1, wherein scanning comprises using an x-ray scan.

6. The method of claim 1, further comprising:
providing a scannable code identifying each container; and
scanning the code and recording the code scan each time the container is opened prior to arrival at a destination.

7. The method of claim 6, wherein the scannable code is a bar code or an RFID code.

8. A computerized security system for use in claim 6, **characterized by** a database of image data of scan results associated with items in containers for shipment; comprising:
when the image data review indicates that the container should not be shipped with its current contents, then preventing shipment of the container with its current contents, otherwise shipping the container according to original shipping instructions.
